# FASCICULE DE BREVET EUROPEEN

(11) **EP 1 772 352 B1**
(45) Date de publication et mention de la délivrance du brevet: **01.06.2011**
(21) Numéro de dépôt: 06301013.6
(22) Date de dépôt: 04.10.2006
(51) Int. Cl.: B62D 25/08, B60Q 1/04, B60R 19/24

(54) **Support pour positionner une pièce de carrosserie et au moins un bloc optique sur un véhicule automobile**
Träger zum Positionieren eines Karosseriebauteils und zumindest einer optischen Einheit auf einem Kraftfahrzeug
Support for positioning a vehicle body part and at least an optical assembly on a motor vehicle

(30) Priorité: 06.10.2005 FR 0510244
(43) Date de publication de la demande: 11.04.2007
(73) Titulaire: COMPAGNIE PLASTIC OMNIUM, 69007 Lyon (FR)
(72) Inventeur: Fayt, Arnold, 01640, JUJURIEUX (FR); Cheron, Hugues, 01800, MEXIMIEUX (FR)
(74) Mandataire: Remy, Vincent Noel Paul

(56) Documents cités:
- EP-A- 1 232 932
- EP-A- 1 352 811
- EP-A- 1 502 841
- EP-A- 1 623 879
- US-B1- 6 386 624

## Description

La présente invention concerne un support permettant de positionner une pièce de carrosserie et au moins un bloc optique sur un véhicule automobile.

On connaît deux méthodes différentes pour monter des éléments d'un bloc avant sur un véhicule automobile.

La première méthode, appelée montage "pièce à pièce", consiste à rapporter des pièces de carrosserie les unes après les autres sur le véhicule. Ces pièces de carrosserie sont par exemple deux blocs optiques, une peau de pare-chocs, deux ailes avant.

Cette première méthode pose des difficultés. Tout d'abord, lorsque des fixations sont ménagées sur des pièces de carrosserie en matière plastique comme la peau de pare-chocs, des retassures apparaissent sur la face externe visible de cette peau, nuisant à l'esthétique du véhicule. Par ailleurs, la mise en référence des pièces, qui est de plus en plus soignée chez les constructeurs automobiles, nécessite beaucoup de manipulations manuelles, chères en main-d'oeuvre, surtout en ce qui concerne la zone du bloc avant entourant les blocs optiques.

La seconde méthode de montage, appelée montage modulaire, consiste à utiliser un support sur lequel les blocs optiques et la peau de pare-chocs sont préalablement positionnés et fixés. Puis l'ensemble de ces pièces est rapporté sur le véhicule sous forme d'un module, dit module d'aspect. Un exemple de montage modulaire est décrit dans le document EP 1 352 811 A1, qui décrit le préambule de la revendication 1.

Un tel support est particulièrement intéressant pour résoudre les difficultés rencontrées lors du montage pièce à pièce. En effet, le support comporte notamment des moyens de fixation des blocs optiques, de la peau de pare-chocs, ainsi que des moyens, tels que des presseurs, permettant de positionner ces pièces les unes par rapport aux autres, ainsi que par rapport à d'autres pièces de carrosserie. Grâce à ce support, les pièces de la carrosserie sont positionnées de façon satisfaisante à l'avant du véhicule.

Cependant, un tel support nécessite d'utiliser une méthode de montage modulaire.

Or, il peut être obligatoire de monter séparément les pièces à l'avant du véhicule, sans avoir recours à un module, de façon à se conformer à une chaîne de montage pièce à pièce existante. Si l'on souhaite monter les pièces les unes après les autres sur une face avant technique, par exemple d'abord les blocs optiques, puis la peau de pare-chocs, un tel ordre de montage n'est pas compatible avec l'utilisation d'un module d'aspect.

La présente invention vise à fournir un support facilitant le positionnement des éléments de carrosserie sur le véhicule, sans que ce support n'impose un montage modulaire.

A cet effet, l'invention a pour objet un support permettant de positionner une pièce de carrosserie et au moins un bloc optique sur un véhicule automobile, le support comportant un élément central souple muni de moyens de fixation de la pièce de carrosserie, caractérisé en ce qu'il comporte en outre au moins un élément latéral, l'élément central souple et l'élément latéral étant distincts, l'élément latéral étant, muni de moyens de fixation du bloc optique, de moyens de mise en référence de la pièce de carrosserie par rapport au bloc optique, de moyens de fixation à l'élément central, et de moyens de fixation à la structure du véhicule.

Dans la suite, on entend par "élément central souple" un élément central réalisé dans un matériau et selon une forme tels que l'élément est souple comparé à des pièces de structure du véhicule, telles qu'une face avant technique, une traverse supérieure ou un longeron. L'élément latéral est de préférence plus rigide que l'élément central.

On entend par "moyens de mise en référence" des moyens qui agissent directement sur les deux bords en regard des pièces à mettre en référence pour positionner ces deux bords l'un par rapport à l'autre. C'est pourquoi de tels moyens sont quelquefois appelés "moyens de mise en référence directe".

De tels moyens se distinguent de moyens de fixation réglables des pièces, lesquels nécessitent que l'on positionne les deux pièces manuellement avant de serrer les fixations. En outre, les moyens de mise en référence directe sont localisés à proximité des bords en regard, alors que les moyens de fixation en sont généralement éloignés.

On entend en outre par support selon l'invention un support constitué de plusieurs éléments, dont au moins un élément central et un élément latéral tels que définis ci-dessus. Par simplification, on décrit l'exemple d'un support constitué d'un seul élément central et de deux éléments latéraux, mais tout ce qui sera décrit pourra également concerner un support muni d'au moins un élément central et au moins un élément latéral.

Par ailleurs, un bloc optique comprend un vitrage d'optique et un boîtier d'optique. Par simplification, les termes « bloc optique » pourront désigner l'une ou l'autre de ces pièces, ou l'ensemble des deux pièces. Ainsi, les moyens de fixation du bloc optique peuvent être des moyens de fixation du vitrage ou du boîtier, et la pièce de carrosserie peut être positionnée par rapport au vitrage ou au boîtier.

Grâce à l'invention, comme le support est composé de plusieurs éléments distincts, par exemple un élément central et deux éléments latéraux, il est possible de monter pièce à pièce les différentes pièces de carrosserie sur le véhicule, par exemple une peau de pare-chocs et deux blocs optiques, tout en assurant un bon positionnement relatif de ces pièces.

Ainsi, selon l'exemple, on peut fixer sur le véhicule, les uns après les autres et dans cet ordre, chaque support latéral, puis chaque bloc optique, puis le support central et enfin la peau de pare-chocs. Un autre ordre est possible, de façon à s'adapter à n'importe quelle chaîne de montage pièce à pièce.

Comme chacun des éléments latéraux comporte des moyens de mise en référence de la peau de pare-chocs par rapport à l'un des blocs optiques, le support selon l'invention assure un bon positionnement d'une pièce de carrosserie, à savoir la peau de pare-chocs, par rapport à chacun des blocs optiques.

On peut également prévoir de pré-monter, hors de la chaîne de montage, chaque bloc optique sur son élément latéral respectif, de monter ensuite chaque ensemble bloc optique/support latéral sur le véhicule, puis de rapporter la peau de pare-chocs pré-montée sur l'élément central, tout en restant dans le cadre d'un montage pièce à pièce.

En outre, tout en permettant un montage pièce à pièce, le support est également adapté à un montage modulaire, si bien que le même support peut être utilisé aussi bien sur une chaîne de montage modulaire que sur une chaîne de montage pièce à pièce. En effet, grâce aux moyens de fixation sur l'élément central, prévus sur les éléments latéraux, on peut fixer ensemble, hors de la chaîne de montage du véhicule, les différents éléments du support, les blocs optiques et la peau de pare-chocs.

Parmi les autres avantages particulièrement intéressants, on notera que, grâce à la possibilité de montage pièce à pièce, une fois le véhicule monté, on peut envisager de démonter seulement les blocs optiques ou seulement la peau de pare-chocs de leur élément de support respectif, sans pour autant modifier le positionnement des autres pièces environnantes, et donc sans avoir à les repositionner ensuite, ce qui diminue les coûts de main d'oeuvre lors de la réparation.

On peut noter également que l'utilisation d'un support en plusieurs parties permet de réparer ou changer uniquement certaines parties plutôt que tout le support en cas de détérioration.

Par ailleurs, comme le support n'est pas constitué d'une unique grande pièce s'étendant sur toute la longueur de la peau de pare-chocs, mais de plusieurs éléments distincts, on réduit l'encombrement du bloc avant au moment du montage, car cette grande pièce aurait pu gêner l'accès à d'autres éléments, tels que la face avant technique ou le bloc moteur. Un autre avantage du fait que le support est composé de plusieurs éléments consiste en ce que les éléments sont de dimensions plus petites que celles d'une unique grande pièce, ce qui élimine certains problèmes bien connus liés à la réalisation de pièces de grandes dimensions.

De préférence, l'élément latéral est conformé de façon à supporter le bloc optique lorsqu'il est monté sur le véhicule. Par exemple, il comprend trois montants disposés en U, à l'intérieur duquel est logé le bloc optique. Eventuellement, la partie inférieure de cet élément latéral comprend une platine horizontale s'étendant sous le bloc optique de façon à le porter.

De préférence, les moyens de positionnement de la pièce de carrosserie, disposés sur l'élément latéral, sont constitués de presseurs, localisés de façon à se retrouver autour du bloc optique lorsque celui-ci est fixé à l'élément latéral. Ainsi, la pièce de carrosserie sera positionnée de façon précise autour du bloc optique, de façon que la pièce et le bloc optique arrivent à affleurement et définissent des jeux les plus faibles, égaux et réguliers possibles.

Selon un mode de réalisation préféré de l'invention, sur l'élément latéral, les moyens de fixation du bloc optique, ainsi que les moyens de fixation de l'élément central, sont démontables. Ceci est particulièrement avantageux pour prévoir les réparations du bloc optique ou des pièces de carrosserie environnantes. En effet, il suffira de démonter ces moyens de fixation pour pouvoir changer ou réparer le bloc optique ou les pièces de carrosserie environnantes, et ce tout en maintenant les autres pièces sur le véhicule.

En combinaison avec des moyens de fixation démontables du bloc optique, l'élément latéral peut comporter des glissières facilitant l'insertion ou le retrait du bloc optique dans ou hors de l'élément latéral.

Eventuellement, toujours sur l'élément latéral, les moyens de fixation du bloc optique sont confondus avec les moyens de fixation à l'élément central. De tels moyens de fixation peuvent être configurés de façon à pouvoir prendre trois positions distinctes : une position de fixation du bloc optique et de l'élément central, une position de fixation du bloc optique uniquement, et une position de non fixation, dans laquelle le bloc optique et l'élément central ne sont pas fixés à l'élément latéral. Un tel moyen de fixation peut comporter une tige insérée dans des oeillets ménagés sur l'élément latéral, la position de la tige déterminant la position de fixation des moyens de fixation. De préférence, les moyens de fixation démontables ne sont accessibles que lorsque le capot du véhicule est ouvert, ce qui permet d'éviter les vols des blocs optiques ou de toute autre pièce de carrosserie.

L'élément central et l'élément latéral comportent chacun des moyens de fixation à la structure du véhicule. Ainsi, lorsque l'on monte le bloc avant selon le montage pièce à pièce, le bloc optique et la pièce de carrosserie sont montés l'un après l'autre sur le véhicule en fixant chacun des deux éléments sur la structure du véhicule, ce qui évite que les pièces de carrosserie comportent des fixations faisant apparaître des retassures.

Selon un mode de réalisation, la pièce de carrosserie est une peau de pare-chocs et l'élément central est un support de cette peau de pare-chocs. En alternative ou en combinaison avec ce mode de réalisation, la pièce de carrosserie est une grille d'entrée d'air, supportée éventuellement par le même élément central que la peau.

Par ailleurs, le support selon l'invention peut comporter des moyens de mise en référence d'une aile ou d'un support d'aile.

De préférence, l'élément central épouse sensiblement la forme intérieure de la pièce de carrosserie. Ainsi, cet élément joue un rôle de renfort de la pièce de carrosserie, un rôle d'anti-cloquage, et permet également de participer à la tenue générale du module hors de la chaîne de montage, lorsque l'on utilise un montage modulaire. De préférence, cet élément central comporte des ajours ou des nervures, de façon à être léger tout en jouant une fonction de renfort.

Par ailleurs, l'un ou l'autre des éléments peut comporter d'autres pièces, telles qu'un absorbeur de chocs ou une voie basse destinée à traiter les chocs piétons, ce qui permet de monter, hors de la chaîne de montage, un module intégrant d'autant plus de pièces pré-montées.

L'invention sera mieux comprise à la lecture de la description qui va suivre, donnée uniquement à titre d'exemple et faite en se référant aux dessins dans lesquels :
- la figure 1 est un schéma en perspective éclatée d'un support selon l'invention ;
- la figure 2 est un schéma en perspective d'un élément latéral du support de la figure 1 ;
- la figure 3 est un schéma en perspective du support de la figure 1, utilisé au cours d'un montage modulaire ;
- la figure 4 est un schéma en perspective du support de la figure 1, utilisé au cours d'un montage pièce à pièce ; et
- la figure 5 est une coupe selon V-V du support de la figure 2, sur lequel sont montés le bloc optique et la peau de pare-chocs.

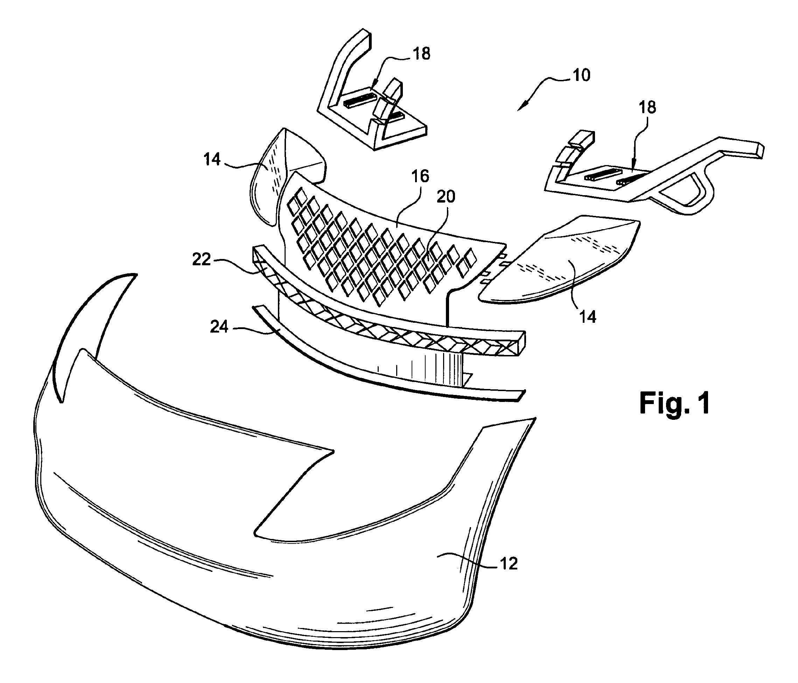

Comme on peut le voir sur la figure 1, un support 10 selon l'invention permet de positionner une peau de pare-chocs 12 et deux blocs optiques 14 d'un véhicule automobile. Le support 10 comporte un élément central 16 et deux éléments latéraux 18, ces deux éléments 18 étant symétriques par rapport au plan longitudinal vertical du véhicule.

L'élément central 16 est souple et constitue un support de la peau de pare-chocs 12, à laquelle il est soudé ou collé, ou bien fixé par d'autres moyens de fixation classiques. Il épouse sensiblement sa forme intérieure, plus précisément la partie de la peau 12 disposée entre les deux blocs optiques 14. L'élément central 16 comporte des ajours 20, de façon à limiter son poids tout en renforçant la peau, notamment pour empêcher son cloquage. Sa souplesse permet de le déformer relativement facilement, pour permettre le positionnement relatif des différentes pièces de carrosserie de l'avant du véhicule.

Cet élément central 16 est par ailleurs fixé à un absorbeur de chocs 22, lui-même fixé à une voie basse 24 destinée à traiter les chocs piétons. Selon un autre mode de réalisation, l'élément central 16, l'absorbeur 22 et la voie basse 24 pourraient être réalisés d'un seul tenant.

Selon un mode de réalisation non représenté, l'élément central pourrait être composé d'une pièce support d'une grille d'entrée d'air, telle qu'une grille de calandre disposée entre les deux blocs optiques 14. Cette grille de calandre pourrait en outre être fixée à une peau de pare-chocs, de forme différente de la peau 12, par exemple située en dessous de la grille de calandre. La peau de pare-chocs et la grille de calandre peuvent être alors supportées soit par un élément central commun, soit par deux éléments centraux distincts réunis entre eux.

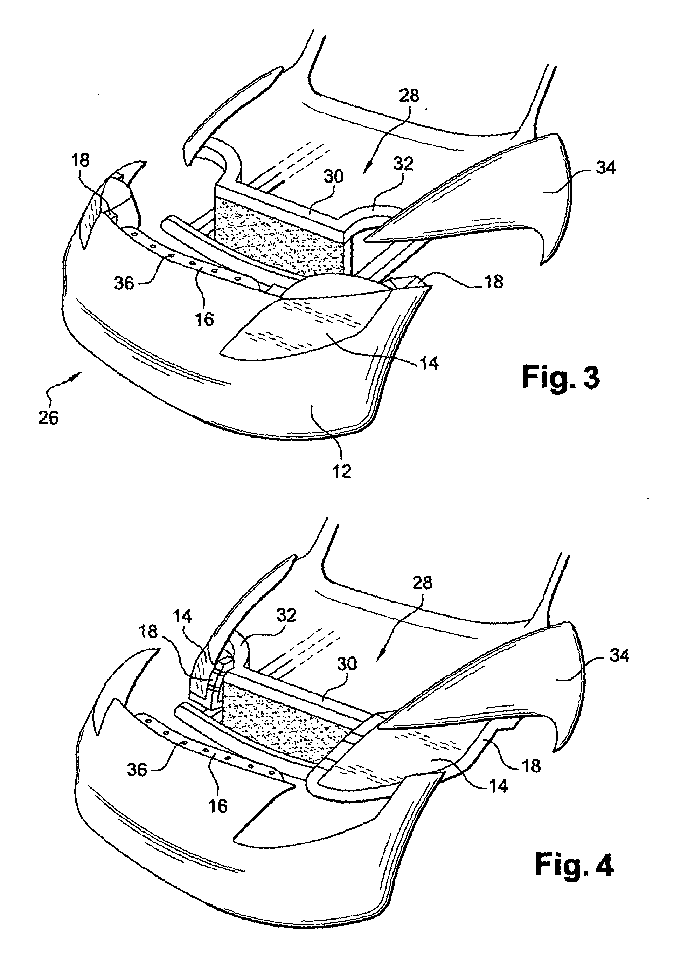

Le procédé de montage de l'avant d'un véhicule comportant le support 10 peut se faire selon deux méthodes : un montage modulaire, illustré sur la figure 3, ou bien un montage pièce à pièce, illustré sur la figure 4.

Le procédé de montage modulaire consiste à assembler, en dehors de la chaîne principale de montage du véhicule, l'ensemble des pièces de la figure 1. On dispose ainsi d'un module 26, comportant à la fois la peau de pare-chocs 12 et les blocs optiques 14, ces trois pièces de carrosserie étant convenablement positionnées grâce à l'élément central 16 et aux deux éléments latéraux 18. Le module 26 comporte en outre l'absorbeur 22 et la voie basse 24.

Une fois assemblé, le module est rapporté sur le reste du véhicule, se trouvant sur la chaîne de montage. A ce stade du montage, le véhicule comprend une caisse en blanc 28, composée de différentes pièces de structure (toutes ne sont pas représentées), parmi lesquelles se trouvent une poutre de chocs, des longerons et une traverse supérieure 30, aux extrémités de laquelle se trouvent deux éléments rigides 32 formant des supports d'ailes. L'élément 16 est plus souple que ces différentes pièces de structure. A ce stade du montage, deux ailes 34 avant sont également montées sur le véhicule.

Pour monter le module 26 sur le reste du véhicule, on fixe l'élément central 16 à la traverse supérieure 30, grâce à des trous de fixation 36 ménagés sur l'élément central 16. Par ailleurs, on fixe l'élément latéral 18 sur le support d'aile 32 à l'aide d'un autre moyen de fixation décrit plus loin. On positionne l'aile 34 sur l'élément latéral 18 qui comporte, comme décrit ci-dessous, des moyens de positionnement ou de fixation de l'aile. Comme la peau et les blocs optiques sont convenablement positionnés sur ce module, l'étape de montage consiste simplement à fixer le module sur le reste du véhicule, sans nécessiter de manipulations pour repositionner les différents éléments de carrosserie situés autour du bloc optique 14, à savoir les ailes et la peau de pare-chocs.

Le support 10 permet également de monter la peau 12 et les blocs optiques 14 selon un montage pièce à pièce, illustré sur la figure 4. Selon ce montage, les blocs optiques 14 sont préalablement fixés sur les supports latéraux 18, et sont ensuite montés sur la structure du véhicule 28. Ce montage est effectué en fixant les supports latéraux 18 sur les supports d'ailes 32 et en les positionnant par rapport à la face avant technique. Les blocs optiques 14 sont positionnés par rapport aux ailes 34 grâce à l'élément latéral 18.

Une fois les blocs optiques 14 montés, on peut rapporter la peau de pare-chocs 12. Celle-ci a préalablement été fixée à l'élément central 16, par soudage ou collage. La peau 12 est fixée sur le véhicule grâce à des trous 36 de l'élément central 16. Elle est en outre convenablement positionnée par rapport aux blocs optiques 14, et par rapport à l'aile 34 grâce aux différents moyens de positionnement ménagés sur le support latéral 18, décrits un peu plus loin.

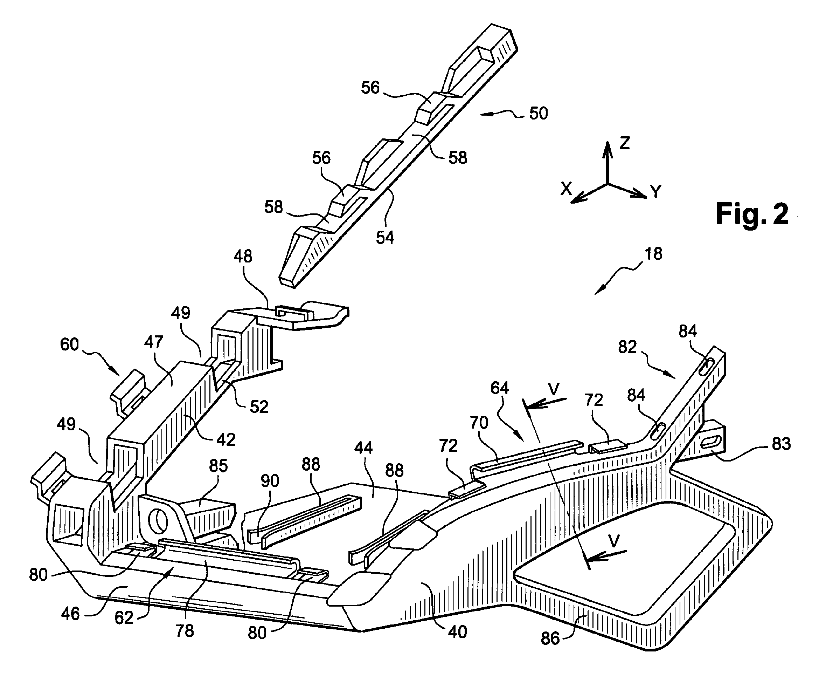

L'élément latéral 18, visible de façon plus détaillée sur la figure 2, est configuré de façon à encadrer le bloc optique 14. Il est plus rigide que l'élément central 16. Il est composé d'un montant vertical extérieur 40, d'un montant vertical intérieur 42 et d'une platine horizontale 44, augmentant sa rigidité, et comportant un bord avant 46. Les montants 40, 42 et la platine 44 sont disposés en U, de façon à définir un logement recevant le bloc optique. La platine 44 permet de soutenir le bloc optique 14 sur une grande surface, mais pourrait être aisément remplacée par un montant horizontal soutenant seulement l'avant du bloc optique 14, au niveau du bord 46.

Le montant intérieur 42 porte des moyens de fixation de l'élément central 16 ainsi que du bloc optique 14. Ces moyens de fixation sont confondus. Ils s'étendent sur toute la longueur du montant 42, sous forme d'un tube creux 47 comportant une ouverture 48 par laquelle est insérée une tige de verrouillage 50. Le bloc optique 14 (non représenté) comporte deux languettes latérales, capables d'être insérées dans deux lumières traversantes 49 ménagées dans le tube creux 47. Par ailleurs, l'élément central 16 du support comporte également deux languettes latérales (non représentées) adaptées pour être insérées dans ces deux lumières 49.

Le fonctionnement de ces moyens de fixation va à présent être décrit.

On fixe le bloc optique 14 en le plaçant dans le logement défini par les montants 40, 42 et la platine 44, et en insérant les deux languettes latérales dans les lumières 49. Puis, on insère la tige 50 dans le tube 47 en la faisant pénétrer par l'ouverture 48. Une fois que la tige 50 est enfoncée dans le tube 47, sans qu'elle ne soit intégralement enfoncée, les languettes latérales du bloc optique 14 sont prises en sandwich, dans les lumières 49, entre la partie inférieure 52 du montant 42 et la paroi inférieure 54 de la tige 50.

Ensuite, pour fixer la peau du pare-chocs 12, via l'élément central 16, sur l'élément latéral 18, la tige 50 ne doit pas être totalement enfoncée dans le tube 47. Ainsi, deux languettes 56, ménagées sur la surface supérieure de la tige 50, ne se retrouvent pas au droit des lumières 49. On peut alors insérer les deux languettes latérales de l'élément central 16 dans les lumières 49, de façon à ce qu'elles reposent sur la surface supérieure 58 de la tige 50. Une fois ces languettes insérées, on peut enfoncer la tige 50 jusqu'au bout du tube 47. Au cours de cette insertion, les languettes supérieures 56 se retrouvent au droit des lumières 49, en recouvrant les languettes latérales de l'élément 16, de façon à les prendre en sandwich entre la paroi 58 de la tige 50 et les languettes 56.

Comme on peut le constater, la tige 50 peut prendre 3 positions distinctes :
- une position de fixation du bloc optique et de l'élément central 16, lorsque la tige 50 est intégralement insérée dans le tube 47,
- une position de fixation du bloc optique uniquement, l'élément central 16 étant libéré, correspondant à la position dans laquelle la tige est partiellement insérée dans le tube 47, les languettes 56 ne se trouvant pas au droit des lumières 49, et
- une position de libération de l'élément central 16 et du bloc optique 14, position obtenue lorsque la tige 50 est retirée du logement 47.

On peut remarquer que la tige est insérée dans l'élément 18 par l'ouverture 48 qui se trouve du côté du montant 42 le plus proche du compartiment moteur du véhicule, si bien que la tige 50, une fois insérée, n'est accessible que depuis ce compartiment moteur, lorsque le capot est ouvert.

L'élément latéral 18 du support comporte par ailleurs des moyens de mise en référence disposés autour du bloc optique, comprenant un presseur 60 ménagé sur le montant 42, un presseur 62 ménagé sur le bord 46, et un presseur 64 ménagé sur le montant 40.

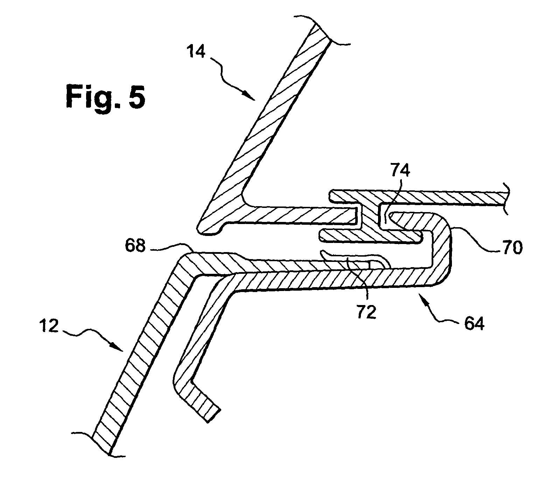

Le fonctionnement du presseur 64, illustré sur la figure 5, va à présent être décrit.

Le presseur 64 sert à positionner le vitrage du bloc optique 14 et le bord 68 de la crosse de pare-chocs. Il comprend à cet effet une grande languette supérieure 70 et deux petites languettes inférieures 72.

Pour positionner le bloc optique 14, on insère la languette 70 dans une encoche 74 ménagée dans le boîtier d'optique. Pour positionner le bord 68 de la peau de pare-chocs, on insère l'extrémité du rebord de la peau dans la languette 72. On voit aisément que la combinaison des languettes 72 et 70 permet de garantir un jeu restreint et constant, et une mise en affleurement du vitrage du bloc optique 14 et de la peau de pare-chocs 12.

Le presseur 60 sert à positionner le bord 76 de la peau de pare-chocs sur l'élément latéral 18, ainsi que le vitrage du bloc optique 14.

Le presseur 62 comporte une grande languette supérieure 78, ainsi que deux petites languettes inférieures 80. Il permet de positionner la peau de pare-chocs et le bloc optique de la même façon que le presseur 64.

L'élément latéral 18 comporte par ailleurs, sur le montant 40, une partie 82 comprenant des moyens 84 de fixation de l'aile. Selon un autre mode de réalisation (non illustré), la partie 82 comporte un presseur permettant de positionner l'aile sur l'élément 18 du support.

Le montant extérieur 40 comporte en outre un renfort 86, destiné à épouser la forme intérieure de la crosse de la peau de pare-chocs 12, de façon à jouer un rôle d'anti-cloquage.

Selon un autre mode de réalisation non représenté, le montant 40 comporte également des moyens de fixation de l'extrémité extérieure de la peau de pare-chocs.

L'élément latéral 18 comporte des moyens de guidage constitués de deux rails 88 ménagés sur la platine 44. Ces rails sont destinés à guider deux pions (non représentés) ménagés sur la partie inférieure du bloc optique 14. Lors du montage du bloc optique, ces deux pions sont insérés dans les deux rails de guidage 88, grâce aux extrémités évasées 90 de ces deux rails, et à un passage ménagé entre les languettes 78 et 80 du presseur 62 pour laisser passer chaque pion.

L'élément latéral 18 comporte enfin un moyen 83 de fixation à la structure du véhicule. Ce moyen 83 est fixé sur la caisse du véhicule, plus précisément le support d'aile 32, lequel impose le positionnement latéral (c'est-à-dire selon la direction Y) de l'élément 18 sur le véhicule. C'est notamment ce positionnement latéral, imposé de chaque côté du véhicule, qui requiert une certaine souplesse de l'élément central 16. L'élément 18 comporte également un moyen 85 de positionnement vertical sur la structure du véhicule. Ce moyen 85 est constitué d'une fourche destinée à être insérée dans une partie horizontale de la face avant technique, de façon à positionner l'élément 18 dans la direction verticale Z.

Bien que cela ne soit pas représenté, on peut prévoir d'intégrer dans l'élément latéral 18 un dispositif de lavage du vitrage d'optique, un capteur-émetteur de rayons infrarouges, ou encore tout autre radar.

On peut constater que, grâce à l'invention, on dispose d'un support permettant de monter l'avant du véhicule selon les deux procédés de montage connus, pièce à pièce et modulaire, permettant d'adapter le montage de l'avant du véhicule à toutes chaînes de montage existantes.

## Revendications

1. Support permettant de positionner une pièce de carrosserie (12) et au moins un bloc optique (14) sur un véhicule automobile, ledit support comportant un élément central souple (16), muni de moyens de fixation de la pièce de carrosserie, et de moyens de fixation à la structure du véhicule, **caractérisé en ce qu'**il comporte en outre au moins un élément latéral (18), l'élément central souple (16) et l'élément latéral (18) étant distincts, l'élément latéral (18) étant muni de :
- moyens (49, 50) de fixation du bloc optique,
- moyens (60, 62, 64) de mise en référence de la pièce de carrosserie (12) par rapport au bloc optique (14),
- moyens (49, 56) de fixation à l'élément central (16), et de
- moyens de fixation à la structure du véhicule.

2. Support selon la revendication 1, dans lequel l'élément latéral est conformé de façon à supporter le bloc optique (14) lorsqu'il est monté sur le véhicule.

3. Support selon l'une quelconque des revendications 1 à 2, comprenant trois montants (40, 42, 44) disposés en U, à l'intérieur duquel est logé le bloc optique.

4. Support selon l'une quelconque des revendications 1 à 3 dont la partie inférieure comprend une platine horizontale (44).

5. Support selon l'une quelconque des revendications 1 à 4, dans lequel les moyens de positionnement (60, 62, 64) de la pièce de carrosserie, disposés sur l'élément latéral (18), sont des presseurs, localisés de façon à se retrouver autour du bloc optique lorsque celui-ci est fixé à l'élément latéral.

6. Support selon l'une quelconque des revendications 1 à 5, dans lequel sur l'élément latéral (18), les moyens (49, 50) de fixation du bloc optique et les moyens (49, 56) de fixation à l'élément central sont démontables.

7. Support selon la revendication 6, dans lequel les moyens de fixation démontables ne sont accessibles que lorsque le capot du véhicule est ouvert.

8. Support selon l'une quelconque des revendications 1 à 7, dans lequel les moyens de fixation du bloc optique sont confondus avec les moyens de fixation au premier élément central, et sont configurés de façon à pouvoir prendre trois positions distinctes : une position de fixation du bloc optique et de l'élément central, une position de fixation du bloc optique uniquement, et une position de non fixation, dans laquelle le bloc optique et l'élément central ne sont pas fixés à l'élément latéral, dans lequel le bloc optique et l'élément central ne sont pas fixés à l'élément latéral.

9. Support selon la revendication 8, dans lequel les moyens de fixation comportent une tige (50) insérée dans l'élément latéral, la position de la tige déterminant la position de fixation des moyens de fixation.

10. Support selon l'une quelconque des revendications 1 à 9, dans lequel l'élément central (16) et l'élément latéral comportent des moyens de positionnement (84) par rapport à la structure du véhicule.

11. Support selon l'une quelconque des revendications 1 à 10, dans lequel la pièce de carrosserie est une peau de pare-chocs (12) et l'élément central est un support de cette peau de pare-chocs.

12. Support selon l'une quelconque des revendications 1 à 11, dans lequel la pièce de carrosserie est une grille de calandre.

13. Support selon l'une quelconque des revendications 1 à 12, comportant des moyens de mise en référence d'une aile.

14. Support selon l'une quelconque des revendications 1 à 13, dans lequel l'élément central épouse sensiblement la forme intérieure de la pièce de carrosserie.

15. Support selon l'une quelconque des revendications 1 à 14, dans lequel l'élément central comporte des ajours ou des nervures.

16. Support selon l'une quelconque des revendications 1 à 15, dans lequel l'élément central ou l'élément latéral comportent un absorbeur de chocs (22) ou une voie basse (24).

## Claims

1. A support for positioning a bodywork part (12) and at least one light unit (14) on a motor vehicle, said support comprising a flexible central element (16) provided with fastener means of the bodywork part, and fastener means for fastening to the structure of the vehicle, the support being **characterized in that** it further comprises at least one lateral element (18), the flexible central element (16) and the lateral element (18) being distinct, the lateral element (18) being provided with:
• means (49, 50) for fastening the light unit;
• means (60, 62, 64) for putting the bodywork part (12) into a reference position relative to the light unit (14);
• means (49, 56) for fastening to the central element (16); and
• means for fastening to the structure of the vehicle.

2. A support according to claim 1, wherein the lateral element is shaped so as to support the light unit (14) when it is mounted on the vehicle.

3. A support according to claim 1 or claim 2, having three bars (40, 42, 44) disposed in a U-shape, with the light unit being housed therein.

4. A support according to any one of claims 1 to 3, wherein the bottom portion comprises a horizontal plate (44).

5. A support according to any one of claims 1 to 4, wherein the means (60, 62, 64) for positioning the bodywork part and placed on the lateral element (18) are pressers located so as to lie around the light unit when the light unit is fastened to the lateral element.

6. A support according to any one of claims 1 to 5, wherein, on the lateral element (18), the means (49, 50) for fastening the light unit and the means (49, 56) for fastening to the central element are releasable.

7. A support according to claim 6, wherein the releasable fastener means are only accessible when the vehicle hood is open.

8. A support according to any one of claims 1 to 7, wherein the fastener means of the light unit coincide with the means for fastening to the first central element, and are configured so as to be capable of occupying three distinct positions: a position for fastening the light unit and the central element, a position for fastening the light unit only, and a non-fastening position, in which the light unit and the central element are not fastened to the lateral element, wherein the light unit and the central element are not fastened to the lateral element.

9. A support according to claim 8, wherein the fastener means comprise a rod (50) inserted in the lateral element the position of the rod determining the fastening position of the fastener means.

10. A support according to any one of claims 1 to 9, wherein the central element (16) and the lateral element include positioning means (84) for positioning relative to the structure of the vehicle.

11. A support according to any one of claims 1 to 10, wherein the bodywork part is a bumper skin (12) and the central element is a support for said bumper skin.

12. A support according to any one of claims 1 to 11, wherein the bodywork part is a radiator grille.

13. A support according to any one of claims 1 to 12, including means for putting a fender into a reference position.

14. A support according to any one of claims 1 to 13, wherein the central element matches substantially the inside shape of the bodywork part.

15. A support according to any one of claims 1 to 14, wherein the central element includes openings or ribs.

16. A support according to any one of claims 1 to 15, wherein the central element or the lateral element include an impact absorber (22) or a lower part (24).

## Patentansprüche

1. Träger, der ein Positionieren eines Karosseriebauteils (12) und mindestens einer optischen Einheit (14) an einem Kraftfahrzeug erlaubt, wobei der Träger ein biegsames zentrales Element (16) aufweist, das mit Mitteln zum Befestigen des Karosseriebauteils versehen ist, und mit Mitteln zum Befestigen an der Struktur des Fahrzeugs, **dadurch gekennzeichnet, dass** er ferner mindestens ein seitliches Element (18) aufweist, wobei das biegsame zentrale Element (16) und das seitliche Element (18) getrennt sind, wobei das seitliche Element (18) versehen ist mit:
- Mitteln (49, 50) zum Befestigen der optischen Einheit,
- Mitteln (60, 62, 64) zum Ausrichten des Karosseriebauteils (12) in Bezug zu der optischen Einheit (14),
- Mitteln (49, 56) zum Befestigen an dem zentralen Element (16), und
- Mitteln zum Befestigen an der Struktur des Fahrzeugs.

2. Träger nach Anspruch 1, bei dem das seitliche Element derart ausgebildet ist, dass es die optische Einheit (14) hält, wenn sie an das Fahrzeug montiert ist.

3. Träger nach einem der Ansprüche 1 bis 2, der drei Streben (40, 42, 44) aufweist, die in Form eines U angeordnet sind, in dessen Innerem die optische Einheit untergebracht ist.

4. Träger nach einem der Ansprüche 1 bis 3, dessen unterer Teil eine horizontale Platte (44) aufweist.

5. Träger nach einem der Ansprüche 1 bis 4, bei dem die Mittel zum Positionieren (60, 62, 64) des Karosseriebauteils, die an dem seitlichen Element (18) angeordnet sind, Druckelemente sind, die derart angeordnet sind, dass sie sich um die optische Einheit herum befinden, wenn diese an dem seitlichen Element befestigt ist.

6. Träger nach einem der Ansprüche 1 bis 5, bei dem an dem seitlichen Element (18) die Mittel (49, 50) zum Befestigen der optischen Einheit und die Mittel (49, 56) zum Befestigen an dem zentralen Element demontierbar sind.

7. Träger nach Anspruch 6, bei dem die demontierbaren Befestigungsmittel nur zugänglich sind, wenn die Haube des Kraftfahrzeugs offen ist.

8. Träger nach einem der Ansprüche 1 bis 7, bei dem die Befestigungsmittel der optischen Einheit mit den Befestigungsmitteln an dem ersten zentralen Element zusammengenommen und derart konfiguriert sind, dass sie drei verschiedene Positionen einnehmen können: eine Position der Befestigung der optischen Einheit und des zentralen Elements, eine Position der Befestigung nur der optischen Einheit und eine Position der Nichtbefestigung, bei der die optische Einheit und das zentrale Element nicht an dem seitlichen Element befestigt sind, bei dem die optische Einheit und das zentrale Element nicht an dem seitlichen Element befestigt sind.

9. Träger nach Anspruch 8, bei dem die Befestigungsmittel einen Schaft (50) aufweisen, der in das seitliche Element eingefügt ist, wobei die Position des Schafts die Befestigungsposition der Befestigungsmittel bestimmt.

10. Träger nach einem der Ansprüche 1 bis 9, bei dem das zentrale Element (16) und das seitliche Element Mittel (84) zum Positionieren in Bezug auf die Struktur des Fahrzeugs aufweisen.

11. Träger nach einem der Ansprüche 1 bis 10, bei dem das Karosseriebauteil eine Stoßfängerverkleidung (12) ist und das zentrale Element ein Träger dieser Stoßfängerverkleidung ist.

12. Träger nach einem der Ansprüche 1 bis 11, bei dem das Karosseriebauteil ein Kühlerschutzgitter ist.

13. Träger nach einem der Ansprüche 1 bis 12, der Mittel zum Ausrichten eines Kotflügels aufweist.

14. Träger nach einem der Ansprüche 1 bis 13, bei dem sich das zentrale Element im Wesentlichen an die Innenform des Karosseriebauteils schmiegt.

15. Träger nach einem der Ansprüche 1 bis 14, bei dem das zentrale Element Durchbrüche oder Rippen aufweist.

16. Träger nach einem der Ansprüche 1 bis 15, bei dem das zentrale Element oder das seitliche Element einen Stoßfänger (22) oder eine untere Schiene (24) aufweist.
